# EUROPEAN PATENT SPECIFICATION

(11) **EP 4 180 781 B1**
(45) Date of publication and mention of the grant of the patent: **27.12.2023**
(21) Application number: 21208482.6
(22) Date of filing: 16.11.2021
(51) Int. Cl.: G01K 1/02, G01K 7/01, H01M 10/48

(54) **A TEMPERATURE MEASUREMENT ARRANGEMENT FOR A BATTERY SYSTEM AND A TEMPERATURE MEASUREMENT METHOD**
TEMPERATURMESSANORDNUNG FÜR EIN BATTERIESYSTEM UND TEMPERATURMESSVERFAHREN
AGENCEMENT DE MESURE DE LA TEMPÉRATURE POUR UN SYSTÈME DE BATTERIE ET PROCÉDÉ DE MESURE DE LA TEMPÉRATURE

(43) Date of publication of application: 17.05.2023
(73) Proprietor: Samsung SDI Co., Ltd., Yongin-si, Gyeonggi-do 17084 (KR)
(72) Inventor: Maxl, Florian, 8020 Graz (AT); Erhart, Michael, 8054 Seiersberg-Pirka (AT)
(74) Representative: Gulde & Partner

(56) References cited:
- DE-A1-102009 012 500
- DE-A1-102020 203 959
- JP-A- H0 526 739
- US-A1- 2019 212 209

## Description

### Field of the Disclosure

The present disclosure relates to a temperature measurement arrangement for a battery system. The present disclosure also relates to a battery system, an electric vehicle, and a temperature measurement method.

### Technological Background

In the recent years, vehicles for transportation of goods and people have been developed using electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator or a hydrogen fuel power cell. Furthermore, the vehicle may include a combination of electric motor and conventional combustion engine. In general, an electric-vehicle battery, EVB, or traction battery is a battery used to power the propulsion of battery electric vehicles, BEVs. Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for electric and hybrid vehicles and the like.

A battery system includes a battery management system (BMS), which is any electronic system that manages the rechargeable battery, battery module and battery pack, such as by protecting the batteries from operating outside their safe operating area, monitoring their states, calculating secondary data, reporting that data, controlling its environment, authenticating it and/or balancing it. For example, the BMS may monitor the state of the battery as represented by voltage (such as total voltage of the battery pack or battery modules, voltages of individual cells), temperature (such as average temperature of the battery pack or battery modules, coolant intake temperature, coolant output temperature, or temperatures of individual cells), coolant flow (such as flow rate, cooling liquid pressure), and current. Additionally, a BMS may calculate values based on the above items, such as minimum and maximum cell voltage, state of charge (SOC) or depth of discharge (DOD) to indicate the charge level of the battery, state of health (SOH; a variously-defined measurement of the remaining capacity of the battery as % of the original capacity), state of power (SOP; the amount of power available for a defined time interval given the current power usage, temperature and other conditions), state of safety (SOS), maximum charge current as a charge current limit (CCL), maximum discharge current as a discharge current limit (DCL), and internal impedance of a cell (to determine open circuit voltage).

The BMS may be centralized such that a single controller is connected to the battery cells through a multitude of wires. The BMS may be also distributed, wherein a BMS board is installed at each cell, with just a single communication cable between the battery and a controller. Or the BMS may be of modular construction including a few controllers, each handling a certain number of cells, with communication between the controllers. Centralized BMSs are most economical, least expandable, and are plagued by a multitude of wires. Distributed BMSs are the most expensive, simplest to install, and offer the cleanest assembly. Modular BMSs offer a compromise of the features and problems of the other two topologies.

A BMS may protect the battery pack from operating outside its safe operating area. Operation outside the safe operating area may be indicated in case of over-current, over-voltage (during charging), over-temperature, under-temperature, over-pressure, and ground fault or leakage current detection. The BMS may prevent operation outside the battery's safe operating area by including an internal switch (such as a relay or solid-state device) which is opened if the battery is operated outside its safe operating area, requesting the devices to which the battery is connected to reduce or even terminate using the battery, and actively controlling the environment, such as through heaters, fans, air conditioning or liquid cooling.

The BMS comprises or is connected to a temperature measurement arrangement for measuring the temperature of the battery cells of the battery system, i.e., of a battery pack or a battery module.

For meeting the dynamic power demands of various electrical consumers connected to the battery system a static control of battery power output and charging is not sufficient. Thus, steady exchange of information between the battery system and the controllers of the electrical consumers is required. This information includes the battery systems actual temperature state of charge, SoC, potential electrical performance, charging ability, internal resistance, actual or predicted power demands or surpluses of the consumers. Therefore, battery systems usually comprise a battery management system, BMS, for obtaining and processing such information on system level and further a plurality of battery module managers, BMMs, which are part of the system's battery modules and obtain and process relevant information on module level. Particularly, the BMS usually measures the system voltage, the system current, the local temperature at different places inside the system housing, and the insulation resistance between live components and the system housing. Additionally, the BMMs usually measure the individual cell voltages and temperatures of the battery cells in a battery module.

Thus, the BMS/BMU is provided for managing the battery pack, such as by protecting the battery from operating outside its safe operating area, monitoring its state, calculating secondary data, reporting that data, controlling its environment, authenticating it and/or balancing it. In particular the BMS/BMU is provided for measurements of a temperature of the battery cells of the battery system.

JP H05-26739 A discloses a multipoint temperature measuring circuit comprising a plurality of vertical electric wires, horizontal electric wires and temperature measuring diodes wired in a grid pattern. One end of each of the temperature measuring diodes is connected to one of the vertical electric wires, the other end of each diode is connected to one of the horizontal electric wires. The circuit comprises multiplexers to apply a current from a constant current power source to a selected diode. In the + pole side multiplexer and the - pole side multiplexer, the movable contact selects a predetermined vertical electric wire and horizontal electric wire, respectively, according to a command signal from a multiplexer control circuit. If a current flows through a diode, the diode causes a voltage drop according to the temperature of the place where the diode is installed. Therefore, by measuring the voltage with the voltmeter, the temperature can be measured at the place where the diode is installed. However, JP H05-26739 A is silent about the application of such a multipoint temperature measuring circuit.

DE 10 2009 012 500 A1 discloses a system for measuring a surface temperature of an electronics device and allowing the effective measurement of many temperatures by exploiting the temperature dependence of electrical properties of diodes. The diodes are interconnected via a matrix of crosswise arranged electrical conductors. To determine the temperature, the forward voltage drop across a diode is measured with a constant current. For this purpose, the switches of a column and a row are closed in a multiplex-method. A constant current generated by the current supply flows through the diode at the crossing point. All other diodes remain unaffected because of their property of only conducting the current in one direction. At an input of an A / D converter there is a voltage that is proportional to the temperature at the diode.

US 2019/212209 A1 and DE 10 2020 203959 A1 also both disclose a plurality of temperature sensors arranged in a matrix.

However, the above-mentioned multiplex-method for switching rows and columns allows, at the same time, to enable the measurement of a single temperature at a certain location only, since only one line is at the same time connectable to the current supply and to the input of the A / D converter.

Conventionally, the temperatures of battery cells of a battery system are measured using negative temperature coefficient, NTC, sensors. Each NTC sensor needs two sensing lines which need to be connected to the electronics. This limits the number of temperature sensors in the battery-pack due to high wiring effort and resulting high costs.

### Summary of Invention

The invention is defined by the appended claims. The description that follows is subjected to this limitation. Any disclosure lying outside the scope of said claims is only intended for illustrative as well as comparative purposes.

According to one aspect of the present disclosure, a temperature measurement arrangement for a battery system comprises: a plurality of first temperature sensing diodes arranged on a grid and arranged to be thermally connectable to battery cells of the battery system, a current supply portion, a voltage measurement portion, and a control portion; wherein the grid comprises a first number of first lines, a second number of second lines and plurality of connections; each connection electrically interconnects one of the first lines or one of the second lines with one of the first temperature sensing diodes; each of the first temperature sensing diodes is oriented so that its forward direction points from one of the first lines to one of the second lines; the current supply portion comprises a plurality of current supply connections being independently of each other suppliable with electric current; each of the first lines comprises a first end being connected to the voltage measurement portion; each of the first lines comprises a second end being connected to the current supply portion via one of the current supply connections; each of the second lines comprises a first end being connected to the control portion via a control portion connection; the control portion is adapted to connect the first end of a selected second line to ground; and wherein the temperature measurement arrangement is adapted to determine temperatures of the first temperature sensing diodes which are connected to the selected second line by measuring voltages via the voltage measurement portion.

According to another aspect of the present disclosure, a battery system comprises a plurality of battery cells and a temperature measurement arrangement according to the present disclosure; wherein the plurality of first temperature sensing diodes is thermally connected to the plurality of battery cells.

Yet another aspect of the present disclosure refers to an electric vehicle comprising the battery system according to the present disclosure.

Yet another aspect of the present disclosure refers to a temperature measurement method for a battery system, wherein the method comprises the steps of: a) providing a battery system according to the present disclosure; b) connecting the first end of a selected second line to ground; and c) determining temperatures of the first temperature sensing diodes which are connected to the selected second line by measuring voltages via the voltage measurement portion.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic view of a temperature measurement arrangement according to an embodiment.
- Fig. 2: illustrates a schematic view of a temperature measurement arrangement according to another embodiment.
- Fig. 3: illustrates a schematic view of temperature measurement by the temperature measurement arrangement as shown in Fig. 2.
- Fig. 4: illustrates a schematic view of another temperature measurement by the temperature measurement arrangement as shown in Fig. 2.
- Fig.5: illustrates a schematic view of an electric vehicle according to an embodiment.

### Detailed Description of the invention

### General Concept

According to one aspect of the present disclosure, a temperature measurement arrangement for a battery system is provided.

The temperature measurement arrangement comprises: a plurality of first temperature sensing diodes arranged on a grid and arranged to be thermally connectable to battery cells of the battery system, a current supply portion, a voltage measurement portion, and a control portion. The arrangement of the first temperature sensing diodes on a grid means that the first temperature sensing diodes are arranged in a two-dimensional arrangement. Therein, distances between any two pairs of adjacently arranged first temperature sensing diodes can equal to each other to achieve a homogeneous distribution of first temperature sensing diodes or be different from each other to heterogeneously distribute first temperature sensing diodes, e.g., to localize first temperature sensing diodes at a thermally sensitive portion of a battery cell. Each of the diodes acts as a single temperature-sensor: the voltage drop across the diode is temperature-dependent and can be measured, optionally by an analog-digital-converter, ADC.

The grid comprises a first number of first lines, a second number of second lines and plurality of connections. Therein, each connection electrically interconnects one of the first lines or one of the second lines with one of the first temperature sensing diodes. The temperature measurement arrangement comprises a matrix-topology in which each first line is electrically connected to one of the second lines via one of the first temperature sensing diodes and to each of the second lines one of the first lines is electrically connected via one of the first temperature sensing diodes.

The current supply portion comprises a plurality of current supply connections being independently of each other suppliable with electric current. Thus, in contrast to a multiplex-current supply, one or more current supply connections can supply an electric current at the same time. This enables a measurement of a plurality of the first temperature sensing diodes of a selected second line simultaneously, e.g., to measure an average temperature over a plurality of first temperature sensing diodes of the selected second line. Therein, each of the first lines comprises a second end being connected to the current supply portion via one of the current supply connections.

Each of the first temperature sensing diodes is oriented so that its forward direction points from one of the first lines to one of the second lines. I.e., an electric current can flow from one of the first lines to one of the second lines via one first temperature sensing diode, wherein a voltage drop occurs due to an electrical resistance of the first temperature sensing diode. Therein, the resistance of the first temperature sensing diodes is temperature dependent.

Each of the first lines comprises a first end being connected to the voltage measurement portion to measure a voltage at each of the first lines and thus to measure the temperature-dependent resistances of the first temperature sensing diodes.

Each of the second lines comprises a first end being connected to the control portion via a control portion connection. Therein, the control portion is adapted to connect the first end of a selected second line to ground. Thereby, the control portion selects one of the second lines to perform a voltage measurement and thus a temperature measurement. Therein, the temperature measurement arrangement is adapted to determine temperatures of the first temperature sensing diodes which are connected to the selected second line by measuring voltages via the voltage measurement portion.

In other words, the present invention uses a diode-based temperature measurement in a matrix-topology to improve the coverage of temperature measurements, leading to a higher safety and a possibility to detect thermal events in a battery cell or a battery system. This invention introduces a cost-efficient method to implement a larger number of temperature sensors being arranged in a matrix-topology while reducing the number of wires. This simplifies the construction and layout of the temperature measurement arrangement, the integration of the temperature measurement arrangement in a battery system, and thereby enables an efficient manufacture of a battery system comprising the temperature measurement arrangement.

According to one embodiment, the temperature measurement arrangement comprises a plurality of second temperature sensing diodes; wherein each of the second temperature sensing diodes is connected in parallel and oppositely oriented to one of the first temperature sensing diodes. This embodiment achieves twice the resolution compared to the embodiment having the first temperature sensing diodes only, even though the same numbers of first lines and of second lines are used. Optionally, the second temperature sensing diodes are of the same type as the first temperature sensing diodes to obtain a simple construction of the temperature measurement arrangement that is not sensitive to the direction of current flowing through the temperature measurement arrangement. Alternatively, the second temperature sensing diodes are of a different type compared to the first temperature sensing diodes to enable, e.g., an efficient and accurate temperature measurement in different temperature ranges.

According to another embodiment, each of the second lines comprises a second end being connected to the current supply portion. This enables efficiently that the plurality of second temperature sensing diodes can be supplied by a current flowing from the second lines to the first lines via one of the second temperature sensing diodes.

According to another embodiment, the temperature measurement arrangement is adapted to supply one or more of the second lines instead of the first lines with a current via the current supply portion and to exchange the voltage measurement portion with the control portion. This enables that, by the exchange of the voltage measurement portion with the control portion, either the first temperature sensing diodes can be used to measure the voltage, i.e., the temperature, or the temperature sensing diodes can be used to measure the voltage, i.e., the temperature. I.e., the temperature measurement arrangement is adapted to switching from a temperature measurement by the first temperature sensing diodes to a temperature measurement by the second temperature sensing diodes. Then, as the voltage measurement portion with the control portion are exchanged, the control portion is adapted to connect to connect the first end of a selected first line to ground. The temperature measurement arrangement being adapted to supply one or more of the second lines instead of the first lines with a current via the current supply portion can be realized by providing a separate current supply portion for the first lines and for the second lines. Alternatively, one current supply portion can be provided, and to perform switching as described above, the current supply portion can be switched to supply the second lines instead of the first lines with current.

According to another embodiment, the current supply portion comprise one current supply connection per second line. Thus, the current supply connections can supply an electric current to each of the second lines, independently of each other and at the same time. This enables a measurement of all of the first temperature sensing diodes of the selected second line or an arbitrary selection and/or combination thereof simultaneously.

According to another embodiment, the number of first temperature sensing diodes equals the first number times the second number. To form the matrix-topology, each of the first lines is connected to each of the second lines via one of the first temperature sensing diodes. Optionally, the number of second temperature sensing diodes equals the first number times the second number.

According to another embodiment, the current supply portion comprise one current supply per first line. Thus, the current supply connections can supply an electric current to each of the first lines, independently of each other and at the same time. This enables a measurement of all temperature measuring diodes of the selected first line simultaneously.

According to another embodiment, the voltage measurement portion comprise an analog-to-digital converter. This enables the output of digital values for further processing of acquired temperature data.

According to another embodiment, the first temperature sensing diodes are arranged on and/or in a flexible flat cable, FFC, or flexible printed circuit, FPC. The diodes can be populated on an FFC or FPC to provide a cost-effective temperature sensor distribution in and/or on the surface of a battery cell and/or a battery system.

According to another embodiment, the grid comprises two times the first number times the second number connections. This enables that each of the first lines is electrically connected to each of the second lines via one of the first temperature sensing diodes. Optionally, if the temperature measurement arrangement comprises a plurality of second temperature sensing diodes, the grid comprises four times the first number times the second number connections. This enables that each of the first lines is electrically connected to each of the second lines via one of the first temperature sensing diodes and each of the second lines is electrically connected to each of the first lines via one of the second temperature sensing diodes.

According to one aspect of the present disclosure, a battery system comprises a plurality of battery cells and a temperature measurement arrangement according to the present disclosure; wherein the plurality of first temperature sensing diodes is thermally connected to the plurality of battery cells. The temperature measurement arrangement can comprise any of the above-described optional features to achieve the technical effect associated therewith. The battery system comprising the above-described temperature measurement arrangement allows particularly reliable and spatially resolved temperature measurements, and is easier to manufacture due to a reduced wiring effort. Optionally, the battery system is a battery cell, a battery module or a battery pack.

According to another embodiment, the battery system further comprises an integrated circuit; wherein the voltage measurement portion and/or the control portion is realized by the integrated circuit of the battery system. This is efficient as the integrated circuit is present anyway and is enabled to supply current for performing temperature measurements and/or to acquire measurement signals.

According to another embodiment, the integrated circuit comprises a plurality of general-purpose-input-output, GPIO, portions; and wherein each of the first ends of the first lines is connected to one of the GPIO portions. This enables an efficient implementation of the above-described embodiment. Each of the GPIO portions can be configured to serve as an input or as an output. Thus, each of the GPIO portion is enables to serves as or being connected to the voltage measurement portion or the current supply portion of the temperature measurement arrangement, depending on the GPIO portion being configured as input or output.

Yet another aspect of the present disclosure refers to an electric vehicle comprising the battery system according to the present disclosure. Therein, the temperature measurement arrangement can comprise any of the above-described optional features to achieve the technical effect associated therewith.

Yet another aspect of the present disclosure refers to a temperature measurement method for a battery system, wherein the method comprises the steps of: a) providing a battery system according to the present disclosure; b) connecting the first end of a selected second line to ground; and c) determining temperatures of the first temperature sensing diodes which are connected to the selected second line by measuring voltages via the voltage measurement portion. This enables performing an efficient and spatially resolved temperature measurement.

### Specific Embodiments

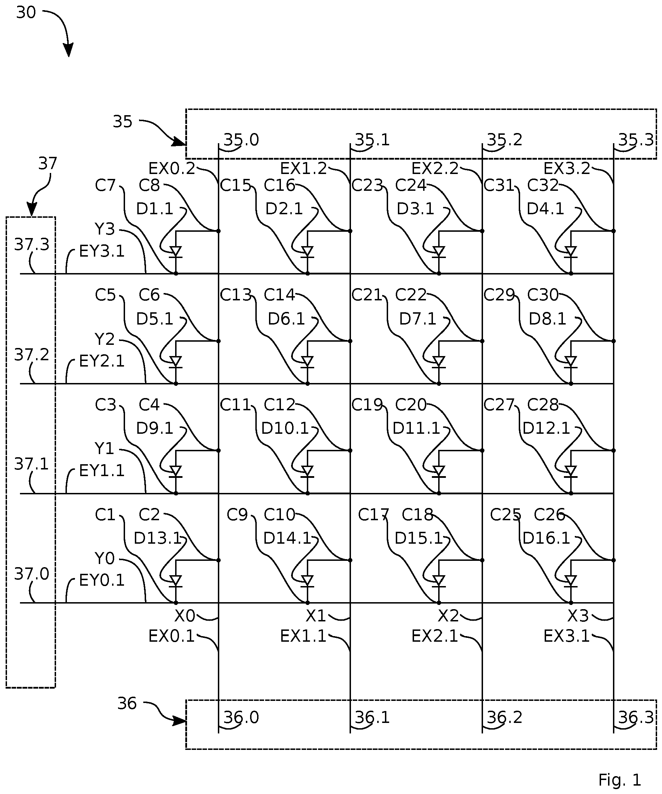

Fig. 1 is a schematic view of a temperature measurement arrangement 30 according to an embodiment.

The temperature measurement arrangement 30 for a battery system 100 comprises a plurality of first temperature sensing diodes D1.1, D2.1, ..., D16.1 arranged on a grid and arranged to be thermally connectable to battery cells 20 of the battery system 100, a current supply portion 35, a voltage measurement portion 36, and a control portion 37.

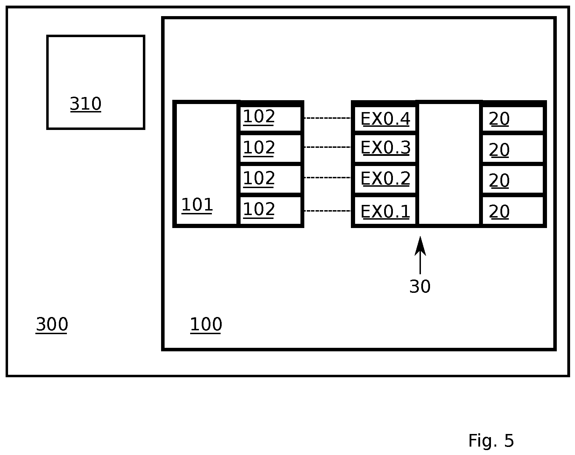

The current supply portion 35, the voltage measurement portion 36, and the control portion 37 are logical portions, i.e., not necessarily physically present as such. E.g., as explained with reference to Fig. 5, each of the voltage measurement portion 36 and the control portion 37, and optionally the current supply portion 35 is realized by a connection to an integrated circuit 101 comprising a plurality of general purpose input output, GPIO, portions 102.

The grid of the temperature measurement arrangement 30 comprises a first number N1 equal to four first lines X0, X1, X2, X3, a second number N2 equal to four second lines Y0, Y1, Y2, Y3 and plurality of connections C.1, C.2, ..., C.32. Each of the connections C.1, C.2, ..., C.32 connects one of the first lines X0, X1, X2, X3 with one of the second lines Y0, Y1, Y2, Y3 via one of the first temperature sensing diodes D1.1, D2.1, ..., D16.1 so that each of the first lines X0, X1, X2, X3 is connected to each of the second lines Y0, Y1, Y2, Y3. Thus, a matrix-topology is formed and the temperature arrangement 30 comprises 2 x N1 x N2 equals to 2 x 4 x 4 equals to 32 connections C.1, C.2, ..., C.32. The number of first temperature sensing diodes D1.1, D2.1, ..., D16.1 equals the first number N1 times the second number N2 equals to 4 x4 equals to 16 first temperature sensing diodes D1.1, D2.1, ..., D16.1.

Each of the first temperature sensing diodes D1.1, D2.1, ..., D16.1 is oriented so that its forward direction points from one of the first lines X0, X1, X2, X3 to one of the second lines Y0, Y1, Y2, Y3.

The current supply portion 35 comprises a plurality of current supply connections 35.0, 35.1, 35.2, 35.3 being independently of each other suppliable with electric current.

Each of the first lines X0, X1, X2, X3 comprises a first end EX0.1, EX1.1, EX2.1, EX3.1 being connected to the voltage measurement portion 36. The voltage measurement portion 36 comprises a number of voltage measurement connections 36.0, 36.1, 36.2, 36.3, wherein the number of voltage measurement connections 36.0, 36.1, 36.2, 36.3 equals the first number N1 of first lines X0, X1, X2, X3. Thus, the voltage measurement portion 36 comprises four voltage measurement connections 36.0, 36.1, 36.2, 36.3. The voltage measurement portion 36 comprise one voltage measurement connections 36.0, 36.1, 36.2, 36.3 per first line X0, X1, X2, X3. Each of the first ends EX0.1, EX1.1, EX2.1, EX3.1 of the first lines X0, X1, X2, X3 is connection to one of the voltage measurement connections 36.0, 36.1, 36.2, 36.3 so that to each of the voltage measurement connections 36.0, 36.1, 36.2, 36.3 one of the first ends EX0.1, EX1.1, EX2.1, EX3.1 is connected.

Each of the first lines X0, X1, X2, X3 comprises a second end EX0.2, EX1.2, EX2.2, EX3.2 being connected to the current supply portion 35 via one of the current supply connections 35.0, 35.1, 35.2, 35.3. The current supply portion 35 comprises a number of current supply connections 35.0, 35.1, 35.2, 35.3, wherein the number of current supply connections 35.0, 35.1, 35.2, 35.3 equals the second number N1 of first lines X0, X1, X2, X3. Thus, the current supply portion 35 comprises four current supply connections 35.0, 35.1, 35.2, 35.3. The current supply portion 35 comprise one current supply connections 35.0, 35.1, 35.2, 35.3 per first line X0, X1, X2, X3. I.e., each of the second ends EX0.2, EX1.2, EX2.2, EX3.2 of the first lines X0, X1, X2, X3 is connection to one of the current supply connections 35.0, 35.1, 35.2, 35.3 so that to each of the current supply connections 35.0, 35.1, 35.2, 35.3 one of the second ends EX0.2, EX1.2, EX2.2, EX3.2 of the first lines X0, X1, X2, X3 is connected.

Each of the second lines Y0, Y1, Y2, Y3 comprises a first end EY0.1, EY1.1, EY2.1, EY3.1 being connected to the control portion 37 via a control portion connection 37.0, 37.1, 37.2, 37.3. The control portion 37 comprises a number of control connections 37.0, 37.1, 37.2, 37.3, wherein the number of control connections 37.0, 37.1, 37.2, 37.3 equals the second number N2 of second lines Y0, Y1, Y2, Y3. Thus, the control portion 37 comprises four control connections 37.0, 37.1, 37.2, 37.3. The control portion 37 comprise one control connections 37.0, 37.1, 37.2, 37.3 per second line Y0, Y1, Y2, Y3. I.e., each of the first ends EY0.1, EY1.1, EY2.1, EY3.1 of the second lines Y0, Y1, Y2, Y3 is connection to one of the control connections 37.0, 37.1, 37.2, 37.3 so that to each of the control connections 37.0, 37.1, 37.2, 37.3 one of the first ends EY0.1, EY1.1, EY2.1, EY3.1 of the second lines Y0, Y1, Y2, Y3 is connected. The control portion 37 is adapted to connect the first end EY0.1, EY1.1, EY2.1, EY3.1 of a selected second line Y0, Y1, Y2, Y3 to ground.

The temperature measurement arrangement 30, 31 is adapted to determine temperatures of the first temperature sensing diodes D1.1, D2.1, ..., D16.1 which are connected to the selected second line Y0, Y1, Y2, Y3 by measuring voltages via the voltage measurement portion 36.

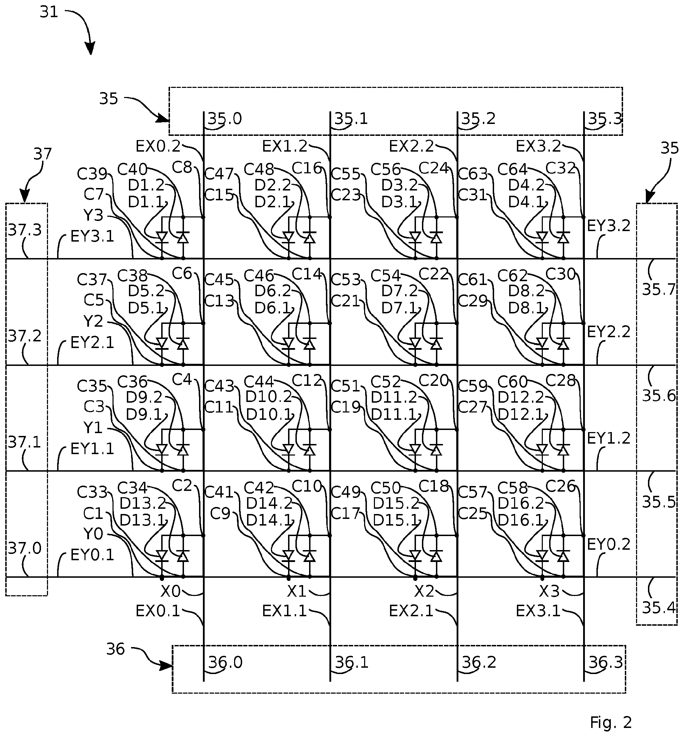

Fig. 2 is a schematic view of a temperature measurement arrangement 31 according to another embodiment. The temperature measurement arrangement 31 is described with reference to the temperature measurement arrangement 30 as shown in Fig. 1 and explained with reference thereto, wherein only the differences between the embodiments of temperature measurement arrangements 30, 31 are detailed in the following.

The temperature measurement arrangement 31 comprises a plurality of second temperature sensing diodes D1.2, D2.2, ..., D16.2. Each of the second temperature sensing diodes D1.2, D2.2, ..., D16.2 is connected in parallel and oppositely oriented to one of the first temperature sensing diodes D1.1, D2.1, ..., D16.1.

Each of the second lines Y0, Y1, Y2, Y3 comprises second ends EY0.2, EY1.2, EY2.2, EY3.2 being connected to the current supply portion 35 via a current supply connection 35.4, 35.5, 35.6, 35.7. The current supply portion 35 comprises current supply connections 35.0, 35.1, 35.2, 35.3, 35.4, 35.5, 35.6, 35.7, wherein the number of current supply connections 35.0, 35.1, 35.2, 35.3, 35.4, 35.5, 35.6, 35.7 equals the first number N1 of first lines X0, X1, X2, X3 plus the second number N2 of second lines Y0, Y1, Y2, Y3. Thus, the control portion 35 comprises eight control connections current supply connections 35.0, 35.1, 35.2, 35.3, 35.4, 35.5, 35.6, 35.7. The control portion 37 comprise one current supply connections 35.0, 35.1, 35.2, 35.3, 35.4, 35.5, 35.6, 35.7 per first line X0, X1, X2, X3 and per second line Y0, Y1, Y2, Y3. I.e., each of the second ends EX0.2, EX1.2, EX2.2, EX3.2 of the first lines X0, X1, X2, X3 and each of the second ends EY0.2, EY1.2, EY2.2, EY3.2 of the second lines Y0, Y1, Y2, Y3 is connection to one of the current supply connections 35.0, 35.1, 35.2, 35.3, 35.4, 35.5, 35.6, 35.7 so that to each of the current supply connections 35.0, 35.1, 35.2, 35.3, 35.4, 35.5, 35.6, 35.7 one of the second ends EX0.2, EX1.2, EX2.2, EX3.2 of the first lines X0, X1, X2, X3 or one of the second ends EY0.2, EY1.2, EY2.2, EY3.2 of the second lines Y0, Y1, Y2, Y3 is connected.

The control portion 37 is adapted to connect the first end EY0.1, EY1.1, EY2.1, EY3.1 of a selected second line Y0, Y1, Y2, Y3 to ground. To perform a temperature measurement 31 by using the second temperature sensing diodes D1.2, D2.2, ..., D16.2, the temperature measurement arrangement 31 is adapted to supply the second lines Y0, Y1, Y2, Y3 instead of the first lines X0, X1, X2, X3 with a current via the current supply portion 35 and to exchange the voltage measurement portion 36 with the control portion 37. Then, the control portion 37 is adapted to connect to connect the first end EX0.1, EX1.1, EX2.1, EX3.1 of a selected first line X0, X1, X2, X4 to ground.

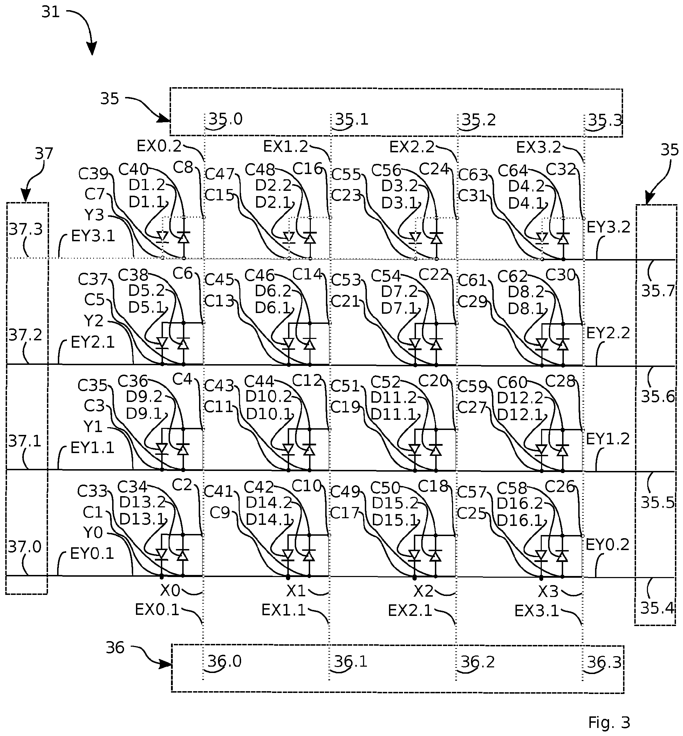

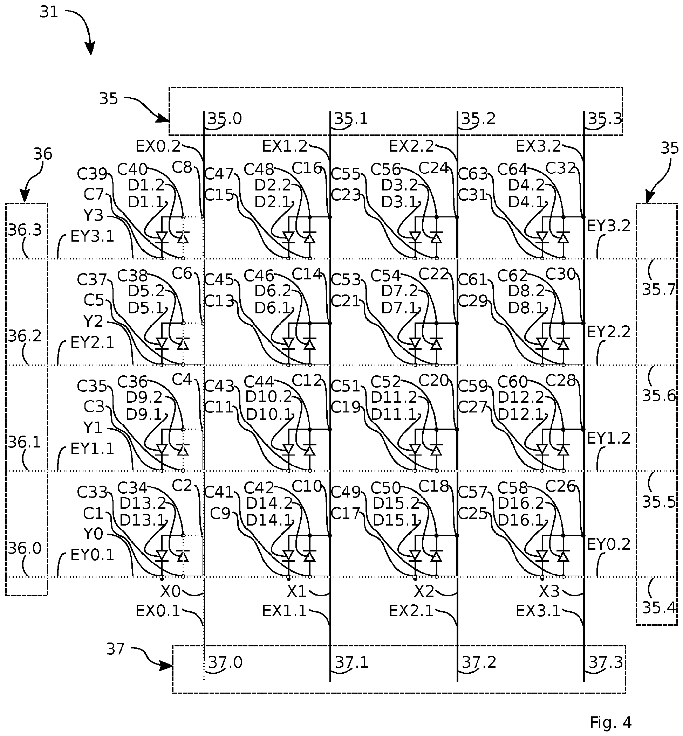

The alternative measurements by using the first temperature sensing diodes D1.1, D2.1, ..., D16.1 or the second temperature sensing diodes D1.2, D2.2, ..., D16.2 is explained with reference to Fig.3 and Fig. 4, respectively.

Fig. 3 illustrates a schematic view of temperature measurement by the temperature measurement arrangement as shown in Fig. 2.

The current supply 35 supplies an electric current at current supply connections 35.0, 35.1, 35.2, 35.3 to the first lines X0, X1, X2, X3 at the second ends EX0.2, EX1.2, EX2.2, EX3.2 of the first lines X0, X1, X2, X3, and at the same time, the current supply 35 does not supply an electric current at current supply connections 35.4, 35.5, 35.6, 35.7 to the second lines Y0, Y1, Y2, Y3 at the second ends EY0.2, EY1.2, EY2.2, EY3.2 of the second lines Y0, Y1, Y2, Y3.

To measure the first temperatures sensing diodes D1.1, D2.1, D3.1, D4.1 the second line Y3 must be pulled to GND by the control portion 37 at the control connection 37.3 connected to the first end EY3.1 of the second line Y3. At the same time, the remaining second lines Y0, Y1, Y2 must be floating or at a large ohmic resistance. The GPIOs at the first lines X0, X1, X2, X3 are configured as ADC input, i.e., each of the GPIO portions is configured as a voltage measurement connection 36.0, 36.1, 36.2, 36.3 of the voltage measurement portion 36.

The path of an electric current flowing through the temperature measurement arrangement 31 for the temperature measurement is indicated by a dotted line.

Fig. 4 illustrates a schematic view of another temperature measurement by the temperature measurement arrangement as shown in Fig. 2.

Note that the voltage measurement portion 36 and the control portion 37 are exchanged for the purpose of this temperature measurement with respect to the temperature measurement as explained in Fig. 3.

The current supply 35 supplies an electric current at current supply connections 35.4, 35.5, 35.6, 35.7 to the second lines Y0, Y1, Y2, Y3 at the second ends EY0.2, EY1.2, EY2.2, EY3.2 of the second lines Y0, Y1, Y2, Y3, and at the same time, the current supply 35 does not supply an electric current at current supply connections 35.0, 35.1, 35.2, 35.3 to the first lines X0, X1, X2, X3 at the second ends EX0.2, EX1.2, EX2.2, EX3.2 of the first lines X0, X1, X2, X3.

To measure the second temperature sensing diodes D1.2, D5.2, D9.2, D13.3 the first line X0 must be pulled to GND by the control portion 37 at the control connection 37.0 connected to the first end EX0.1 of the first line X0. At the same time, the remaining first lines X1, X2, X3 must be floating or at a large ohmic resistance. The GPIO portions at the second lines Y0, Y1, Y2, Y3 are configured as ADC input, i.e., each of the GPIO portions is configured as a voltage measurement connection 36.0, 36.1, 36.2, 36.3 of the voltage measurement portion 35.

The path of an electric current flowing through the temperature measurement arrangement 31 for the temperature measurement is indicated by a dotted line.

Fig. 5 illustrates a schematic view of an electric vehicle 300 according to an embodiment.

The electric vehicle 300 is propelled by an electric motor 310, using energy stored in rechargeable batteries arranged in a battery system 100. The battery system 100 comprises a set of secondary battery cells 20, here four battery cells 20 are indicated for an illustrative purpose only.

The battery system 100 comprises a temperature measurement arrangement 30 as described with reference to Fig. 1. Alternatively and not shown in the Figures, the battery system 100 comprises a temperature measurement arrangement 31 as described with reference to Fig. 2.

The temperature measurement arrangement 30 is arranged so that the plurality of first temperature sensing diodes D1.1, D2.1, ..., D16.1 is thermally connected to the plurality of battery cells 20 (not shown).

The battery system 100 further comprises an integrated circuit 101. Therein, the voltage measurement portion 36 and/or the control portion 37 is realized by the integrated circuit 101 of the battery system 100. The integrated circuit 101 comprises a plurality of general-purpose-input-output, GPIO, portions 102. Therein, each of the first ends EX0.1, EX1.1, EX2.1, EX3.1 of the first lines X0, X1, X2, X3 is connected to one of the GPIO portions 102 as indicated by one of the dashed lines, each. Thus, temperature sensing is implemented by using free GPIO-Pins on the Cell-Voltage measurement integrated circuit 101, wherein the reference voltage is generated by the same integrated circuit 101 to provide an cost-efficient embodiment that minimized wiring.

In this schematic example, the first temperature sensing diodes D1.1, D2.1, ..., D16.1, of one of the first lines X0, X1, X2, X3 are connected thermally to one of the battery cells 20. Thus, for each battery cell 20, the second number N2 of second lines Y0, Y1, Y2, Y3 equal to four first temperature sensing diodes D1.1, D2.1, ..., D16.1 can be distributed at each of the battery cells 20. This enables an efficient distribution of temperature sensing diodes D1.1, D2.1, ..., D16.1. In another example (not shown), less, e.g., one of the temperature sensing diodes D1.1, D2.1, ..., D16.1 can be thermally attached to one battery cell 20, each, or more, e.g., all of the temperature sensing diodes D1.1, D2.1, ..., D16.1 can be thermally attached to one battery cell 20. To facilitate the distribution of the first temperature sensing diodes D1.1, D2.1, ..., D16.1, first temperature sensing diodes D1.1, D2.1, ..., D16.1 are arranged on and/or in a flexible flat cable, FFC, or flexible printed circuit, FPC (not shown) to be efficiently applicable, i.e., mountable, to the battery cells 20.

The voltage measurement portion 36 comprise an analog-to-digital converter.

### Reference signs

- 20: battery cells

- 30: temperature measurement arrangement
- 31: temperature measurement arrangement

- 35: current supply portion
- 35.0, 35.1, ..., 35.7: current supply connection
- 36: voltage measurement portion
- 36.0, 36.1, 36.2, 36.3: voltage measurement connection
- 37: control portion
- 37.0, 37.1, 37.2, 37.3: control portion connection

- 100: battery system
- 101: integrated circuit
- 102: general-purpose-input-output, GPIO, portions

- 300: electric vehicle
- 310: electric motor

- C.1, C.2, ..., C.64: connection
- D1.1, D2.1, ..., D16.1: first temperature sensing diode
- D1.2, D2.2, ..., D16.2: second temperature sensing diode
- EX0.1, EX1.1, EX2.1, EX3.1: first end of first line
- EX0.2, EX1.2, EX2.2, EX3.2: second end of first line
- EY0.1, EY1.1, EY2.1, EY3.1: first end of second line
- EY0.2, EY1.2, EY2.2, EY3.2: second end of second line

- N1: first number
- N2: second number

- X0, X1, X2, X3: first line
- Y0, Y1, Y2, Y3: second line

## Claims

1. A temperature measurement arrangement (30, 31) for a battery system (100), comprising:
- a plurality of first temperature sensing diodes (D1.1, D2.1, ..., D16.1) arranged on a grid and arranged to be thermally connectable to battery cells (20) of the battery system (100), a current supply portion (35), a voltage measurement portion (36), and a control portion (37); wherein
- the grid comprises a first number (N1) of first lines (X0, X1, X2, X3), a second number (N2) of second lines (Y0, Y1, Y2, Y3) and plurality of connections (C.1, C.2, ..., C.64);
- each connection (C.1, C.2, ..., C.64) electrically interconnects one of the first lines (X0, X1, X2, X3) or one of the second lines (Y0, Y1, Y2, Y3) with one of the first temperature sensing diodes (D1.1, D2.1, ..., D16.1);
- each of the first temperature sensing diodes (D1.1, D2.1, ..., D16.1) is oriented so that its forward direction points from one of the first lines (X0, X1, X2, X3) to one of the second lines (Y0, Y1, Y2, Y3);
- the current supply portion (35) comprises a plurality of current supply connections (35.0, 35.1, 35.2, 35.3) being independently of each other suppliable with electric current;
- each of the first lines (X0, X1, X2, X3) comprises a first end (EX0.1, EX1.1, EX2.1, EX3.1) being connected to the voltage measurement portion (36);
**characterised in that**
- each of the first lines (X0, X1, X2, X3) comprises a second end (EX0.2, EX1.2, EX2.2, EX3.2) being connected to the current supply portion (35) via one of the current supply connections (35.0, 35.1, 35.2, 35.3);
- each of the second lines (Y0, Y1, Y2, Y3) comprises a first end (EY0.1, EY1.1, EY2.1, EY3.1) being connected to the control portion (37) via a control portion connection (37.0, 37.1, 37.2, 37.3);
- the control portion (37) is adapted to connect the first end (EY0.1, EY1.1, EY2.1, EY3.1) of a selected second line (Y0, Y1, Y2, Y3) to ground; and wherein
- the temperature measurement arrangement (30, 31) is adapted to determine temperatures of the first temperature sensing diodes (D1.1, D2.1, ..., D16.1) which are connected to the selected second line (Y0, Y1, Y2, Y3) by measuring voltages via the voltage measurement portion (36).

2. The temperature measurement arrangement (30, 31) as claimed in claim 1; wherein
- the temperature measurement arrangement (30, 31) comprises a plurality of second temperature sensing diodes (D1.2, D2.2, ..., D16.2); and wherein
- each of the second temperature sensing diodes (D1.2, D2.2, ..., D16.2) is connected in parallel and oppositely oriented to one of the first temperature sensing diodes (D1.1, D2.1, ..., D16.1).

3. The temperature measurement arrangement (30, 31) as claimed in claim 2; wherein each of the second lines (Y0, Y1, Y2, Y3) comprises a second end (EY0.2, EY1.2, EY2.2, EY3.2) being connected to the current supply portion (35).

4. The temperature measurement arrangement (30, 31) as claimed in claim 3; wherein the temperature measurement arrangement (30, 31) is adapted to supply one or more of the second lines (Y0, Y1, Y2, Y3) instead of the first lines (X0, X1, X2, X3) with a current via the current supply portion (35) and to exchange the voltage measurement portion (36) with the control portion (37).

5. The temperature measurement arrangement (30, 31) as claimed in claim 3 or 4; wherein the current supply portion (35) comprise one current supply connections (35.4, 35.5, 35.6, 35.7) per second line (Y0, Y1, Y2, Y3).

6. The temperature measurement arrangement (30, 31) as claimed in any one of the preceding claims; wherein the number of first temperature sensing diodes (D1.1, D2.1, ..., D16.1) equals the first number (N1) times the second number (N2).

7. The temperature measurement arrangement (30, 31) as claimed in any one of the preceding claims; wherein the current supply portion (35) comprise one current supply connections (35.0, 35.1, 35.2, 35.3) per first line (X0, X1, X2, X3).

8. The temperature measurement arrangement (30, 31) as claimed in any one of the preceding claims; wherein the voltage measurement portion (36) comprise an analog-to-digital converter.

9. The temperature measurement arrangement (30, 31) as claimed in any one of the preceding claims; wherein the first temperature sensing diodes (D1.1, D2.1, ..., D16.1) are arranged on and/or in a flexible flat cable, FFC, or flexible printed circuit, FPC.

10. The temperature measurement arrangement (30, 31) as claimed in any one of the preceding claims; wherein the grid comprises two times the first number (N1) times the second number (N2) connections (C.1, C.2, ..., C.64).

11. A battery system (100) comprises a plurality of battery cells (20) and a temperature measurement arrangement (30, 31) as claimed in any one of the preceding claims; wherein the plurality of first temperature sensing diodes (D1.1, D2.1, ..., D16.1) is thermally connected to the plurality of battery cells (20)

12. The battery system (100) according to claim 11; wherein the battery system (100) further comprises an integrated circuit (101); and wherein the voltage measurement portion (36) and/or the control portion (37) is realized by the integrated circuit (101) of the battery system (100).

13. The battery system (100) according to claim 12; wherein the integrated circuit (101) comprises a plurality of general-purpose-input-output, GPIO, portions (102); and wherein each of the first ends (EX0.1, EX1.1, EX2.1, EX3.1) of the first lines (X0, X1, X2, X3) is connected to one of the GPIO portions (102).

14. An electric vehicle (300) comprising the battery system (100) according to any one of claims 11 to 13.

15. A temperature measurement method for a battery system (100), wherein the method comprises the steps of:
a) providing a battery system (100) as defined in any of claims 11 to 13;
b) connecting the first end (EY0.1, EY1.1, EY2.1, EY3.1) of a selected second line (Y0, Y1, Y2, Y3) to ground; and
c) determining temperatures of the first temperature sensing diodes (D1.1, D2.1, ..., D16.1) which are connected to the selected second line (Y0, Y1, Y2, Y3) by measuring voltages via the voltage measurement portion (36).

## Patentansprüche

1. Temperaturmessanordnung (30, 31) für ein Batteriesystem (100), umfassend:
- eine Vielzahl von ersten Temperaturerfassungsdioden (D1.1, D2.1, ..., D16.1), die auf einem Gitter angeordnet sind und so angeordnet sind, dass sie mit Batteriezellen (20) des Batteriesystems (100) thermisch verbunden werden können, einen Stromversorgungsabschnitt (35), einen Spannungsmessabschnitt (36) und einen Steuerabschnitt (37); wobei
- das Gitter eine erste Anzahl (N1) von ersten Leitungen (X0, X1, X2, X3), eine zweite Anzahl (N2) von zweiten Leitungen (Y0, Y1, Y2, Y3) und eine Vielzahl von Verbindungen (C.1, C.2, ..., C.64) umfasst;
- jede Verbindung (C.1, C.2, ..., C.64) elektrisch eine der ersten Leitungen (X0, X1, X2, X3) oder eine der zweiten Leitungen (Y0, Y1, Y2, Y3) mit einer der ersten Temperaturerfassungsdioden (D1.1, D2.1, ..., D16.1) verbindet;
- jede der ersten Temperaturerfassungsdioden (D1.1, D2.1, ..., D16.1) so ausgerichtet ist, dass ihre Vorwärtsrichtung von einer der ersten Leitungen (X0, X1, X2, X3) zu einer der zweiten Leitungen (Y0, Y1, Y2, Y3) zeigt;
- der Stromversorgungsabschnitt (35) eine Vielzahl von Stromversorgungsverbindungen (35.0, 35.1, 35.2, 35.3) umfasst, die unabhängig voneinander mit elektrischem Strom versorgt werden können;
- jede der ersten Leitungen (X0, X1, X2, X3) ein erstes Ende (EX0.1, EX1.1, EX2.1, EX3.1) aufweist, das mit dem Spannungsmessabschnitt (36) verbunden ist; **dadurch gekennzeichnet, dass**
- jede der ersten Leitungen (X0, X1, X2, X3) ein zweites Ende (EX0.2, EX1.2, EX2.2, EX3.2) aufweist, das mit dem Stromversorgungsabschnitt (35) über einen der Stromversorgungsverbindungen (35.0, 35.1, 35.2, 35.3) verbunden ist;
- jede der zweiten Leitungen (Y0, Y1, Y2, Y3) ein erstes Ende (EY0.1, EY1.1, EY2.1, EY3.1) aufweist, das mit dem Steuerabschnitt (37) über eine Steuerabschnittsverbindung (37.0, 37.1, 37.2, 37.3) verbunden ist;
- der Steuerabschnitt (37) angepasst ist, um das erste Ende (EY0.1, EY1.1, EY2.1, EY3.1) einer ausgewählten zweiten Leitung (Y0, Y1, Y2, Y3) mit Masse zu verbinden; und wobei
- die Temperaturmessanordnung (30, 31) angepasst ist, um Temperaturen der ersten Temperaturerfassungsdioden (D1.1, D2.1, ..., D16.1) zu bestimmen, die mit der ausgewählten zweiten Leitung (Y0, Y1, Y2, Y3) verbunden sind, indem Spannungen über den Spannungsmessabschnitt (36) gemessen werden.

2. Temperaturmessanordnung (30, 31) nach Anspruch 1, wobei
- die Temperaturmessanordnung (30, 31) eine Vielzahl von zweiten Temperaturerfassungsdioden (D1.2, D2.2, ..., D16.2) umfasst; und wobei
- jede der zweiten Temperaturerfassungsdioden (D1.2, D2.2, ..., D16.2) parallel mit einer der ersten Temperatursensordioden (D1.1, D2.1, ..., D16.1) geschaltet und entgegengesetzt zu dieser ausgerichtet ist.

3. Temperaturmessanordnung (30, 31) nach Anspruch 2, wobei jede der zweiten Leitungen (Y0, Y1, Y2, Y3) ein zweites Ende (EY0.2, EY1.2, EY2.2, EY3.2) aufweist, das mit dem Stromversorgungsabschnitt (35) verbunden ist.

4. Temperaturmessanordnung (30, 31) nach Anspruch 3, wobei die Temperaturmessanordnung (30, 31) angepasst ist, eine oder mehrere der zweiten Leitungen (Y0, Y1, Y2, Y3) anstelle der ersten Leitungen (X0, X1, X2, X3) über den Stromversorgungsabschnitt (35) mit einem Strom zu versorgen und den Spannungsmessabschnitt (36) mit dem Steuerabschnitt (37) auszutauschen.

5. Temperaturmessanordnung (30, 31) nach Anspruch 3 oder 4, wobei der Stromversorgungsabschnitt (35) eine Stromversorgungsverbindung (35.4, 35.5, 35.6, 35.7) pro zweiter Leitung (Y0, Y1, Y2, Y3) umfasst.

6. Temperaturmessanordnung (30, 31) nach einem der vorhergehenden Ansprüche; wobei die Anzahl der ersten Temperaturerfassungsdioden (D1.1, D2.1, ..., D16.1) gleich der ersten Anzahl (N1) mal der zweiten Anzahl (N2) ist.

7. Temperaturmessanordnung (30, 31) nach einem der vorhergehenden Ansprüche, wobei der Stromversorgungsabschnitt (35) eine Stromversorgungsverbindung (35.0, 35.1, 35.2, 35.3) pro erster Leitung (X0, X1, X2, X3) umfasst.

8. Temperaturmessanordnung (30, 31) nach einem der vorhergehenden Ansprüche, wobei der Spannungsmessabschnitt (36) einen Analog-Digital-Wandler umfasst.

9. Temperaturmessanordnung (30, 31) nach einem der vorhergehenden Ansprüche, wobei die ersten Temperaturmessdioden (D1.1, D2.1, ..., D16.1) auf und/oder in einem flexiblen Flachkabel, FFC, oder einer flexiblen Leiterplatte, FPC, angeordnet sind.

10. Temperaturmessanordnung (30, 31) nach einem der vorhergehenden Ansprüche, wobei das Gitter das Zweifache der ersten Anzahl (N1) mal der zweiten Anzahl (N2) von Verbindungen (C.1, C.2, ..., C.64) umfasst.

11. Batteriesystem (100) mit einer Vielzahl von Batteriezellen (20) und einer Temperaturmessanordnung (30, 31) nach einem der vorhergehenden Ansprüche, wobei die Vielzahl von ersten Temperaturerfassungsdioden (D1.1, D2.1, ..., D16.1) thermisch mit der Vielzahl von Batteriezellen (20) verbunden ist.

12. Batteriesystem (100) nach Anspruch 11, wobei das Batteriesystem (100) ferner eine integrierte Schaltung (101) umfasst, und wobei der Spannungsmessabschnitt (36) und/oder der Steuerabschnitt (37) durch die integrierte Schaltung (101) des Batteriesystems (100) realisiert wird.

13. Batteriesystem (100) nach Anspruch 12, wobei die integrierte Schaltung (101) eine Vielzahl von Allzweck-Eingabe-Ausgabe-, GPIO,-Abschnitten (102) umfasst, und wobei jedes der ersten Enden (EX0.1, EX1.1, EX2.1, EX3.1) der ersten Leitungen (X0, X1, X2, X3) mit einem der GPIO-Abschnitte (102) verbunden ist.

14. Elektrofahrzeug (300) mit dem Batteriesystem (100) nach einem der Ansprüche 11 bis 13.

15. Temperaturmessverfahren für ein Batteriesystem (100), wobei das Verfahren die folgenden Schritte umfasst:
a) Bereitstellen eines Batteriesystems (100) nach einem der Ansprüche 11 bis 13;
b) Verbinden des ersten Endes (EY0.1, EY1.1, EY2.1, EY3.1) einer ausgewählten zweiten Leitung (Y0, Y1, Y2, Y3) mit Masse; und
c) Bestimmen der Temperaturen der ersten Temperaturerfassungsdioden (D1.1, D2.1, ..., D16.1), die mit der ausgewählten zweiten Leitung (Y0, Y1, Y2, Y3) verbunden sind, durch Messen von Spannungen über den Spannungsmessabschnitt (36).

## Revendications

1. Agencement de mesure de température (30, 31) pour un système de batterie (100), comprenant :
- une pluralité de premières diodes de détection de température (D1.1, D2.1, ..., D16.1) disposées sur une grille et disposées pour pouvoir être thermiquement connectées aux cellules de batterie (20) du système de batterie (100), à une partie d'alimentation en courant (35), à une partie de mesure de tension (36) et à une partie de commande (37) ; dans lequel
- la grille comprend un premier nombre (N1) de premières lignes (X0, X1, X2, X3), un deuxième nombre (N2) de deuxièmes lignes (Y0, Y1, Y2, Y3) et une pluralité de connexions (C.1, C.2, ..., C.64) ;
- chaque connexion (C.1, C.2, ..., C.64) interconnecte électriquement l'une des premières lignes (X0, X1, X2, X3) ou l'une des deuxièmes lignes (Y0, Y1, Y2, Y3) avec l'une des premières diodes de détection de température (D1.1, D2.1, ..., D16.1) ;
- chacune des premières diodes de détection de température (D1.1, D2.1, ..., D16.1) est orientée de sorte que sa direction avant pointe depuis l'une des premières lignes (X0, X1, X2, X3) vers l'une des deuxièmes lignes (Y0, Y1, Y2, Y3) ;
- la partie d'alimentation en courant (35) comprend une pluralité de connexions d'alimentation en courant (35.0, 35.1, 35.2, 35.3) pouvant être alimentées indépendamment les unes des autres en courant électrique ;
- chacune des premières lignes (X0, X1, X2, X3) comprend une première extrémité (EX0.1, EX1.1, EX2.1, EX3.1) qui est connectée à la partie de mesure de tension (36) ;
**caractérisé en ce que**
- chacune des premières lignes (X0, X1, X2, X3) comprend une deuxième extrémité (EX0.2, EX1.2, EX2.2, EX3.2) qui est connectée à la partie d'alimentation en courant (35) via l'une des connexions d'alimentation en courant (35.0, 35.1, 35.2, 35.3) ;
- chacune des deuxièmes lignes (Y0, Y1, Y2, Y3) comprend une première extrémité (EY0.1, EY1.1, EY2.1, EY3.1) qui est connectée à la partie de commande (37) via une connexion de partie de commande (37.0, 37.1, 37.2, 37.3) ;
- la partie de commande (37) est adaptée pour connecter la première extrémité (EY0.1, EY1.1, EY2.1, EY3.1) d'une deuxième ligne sélectionnée (Y0, Y1, Y2, Y3) à la terre ; et dans lequel
- l'agencement de mesure de température (30, 31) est adapté pour déterminer des températures des premières diodes de détection de température (D1.1, D2.1, ..., D16.1) qui sont connectées à la deuxième ligne (Y0, Y1, Y2, Y3) sélectionnée en mesurant des tensions via la partie de mesure de tension (36) .

2. Agencement de mesure de température (30, 31) selon la revendication 1 ; dans lequel
- l'agencement de mesure de température (30, 31) comprend une pluralité de deuxièmes diodes de détection de température (D1.2, D2.2, ..., D16.2) ; et dans lequel
- chacune des deuxièmes diodes de détection de température (D1.2, D2.2, ..., D16.2) est connectée en parallèle et orientée de manière opposée à l'une des premières diodes de détection de température (D1.1, D2.1, ..., D16.1).

3. Agencement de mesure de température (30, 31) selon la revendication 2 ; dans lequel
chacune des deuxièmes lignes (Y0, Y1, Y2, Y3) comprend une deuxième extrémité (EY0.2, EY1.2, EY2.2, EY3.2) qui est connectée à la partie d'alimentation en courant (35).

4. Agencement de mesure de température (30, 31) selon la revendication 3 ; dans lequel
l'agencement de mesure de température (30, 31) est adapté pour alimenter en courant une ou plusieurs des deuxièmes lignes (Y0, Y1, Y2, Y3) au lieu des premières lignes (X0, X1, X2, X3) via la partie d'alimentation en courant (35) et pour échanger la partie de mesure de tension (36) avec la partie de commande (37).

5. Agencement de mesure de température (30, 31) selon la revendication 3 ou 4 ; dans lequel la partie d'alimentation en courant (35) comprend une connexion d'alimentation en courant (35.4, 35.5, 35.6, 35.7) par deuxième ligne (Y0, Y1, Y2, Y3).

6. Agencement de mesure de température (30, 31) selon l'une quelconque des revendications précédentes ; dans lequel le nombre de premières diodes de détection de température (D1.1, D2.1, ..., D16.1) est égal au premier nombre (N1) multiplié par le deuxième nombre (N2).

7. Agencement de mesure de température (30, 31) selon l'une quelconque des revendications précédentes ; dans lequel la partie d'alimentation en courant (35) comprend une connexion d'alimentation en courant (35.0, 35.1, 35.2, 35.3) par première ligne (X0, X1, X2, X3).

8. Agencement de mesure de température (30, 31) selon l'une quelconque des revendications précédentes ; dans lequel la partie de mesure de tension (36) comprend un convertisseur analogique-numérique.

9. Agencement de mesure de température (30, 31) selon l'une quelconque des revendications précédentes ;
dans lequel les premières diodes de détection de température (D1.1, D2.1, ..., D16.1) sont disposées sur et/ou dans un câble plat flexible, FFC, ou un circuit imprimé flexible, FPC.

10. Agencement de mesure de température (30, 31) selon l'une quelconque des revendications précédentes ; dans lequel la grille comprend deux fois le premier nombre (N1) fois le deuxième nombre (N2) de connexions (C.1, C.2, ..., C.64) .

11. Système de batterie (100) comprend une pluralité de cellules de batterie (20) et un agencement de mesure de température (30, 31) selon l'une quelconque des revendications précédentes ; dans lequel la pluralité de premières diodes de détection de température (D1.1, D2.1, ..., D16.1) est thermiquement connectée à la pluralité de cellules de batterie (20).

12. Système de batterie (100) selon la revendication 11 ; dans lequel le système de batterie (100) comprend en outre un circuit intégré (101) ; et dans lequel la partie de mesure de tension (36) et/ou la partie de commande (37) est réalisée par le circuit intégré (101) du système de batterie (100) .

13. Système de batterie (100) selon la revendication 12 ; dans lequel le circuit intégré (101) comprend une pluralité de parties d'entrée-sortie à usage général, GPIO (102) ; et dans lequel chacune des premières extrémités (EX0.1, EX1.1, EX2.1, EX3.1) des premières lignes (X0, X1, X2, X3) est connectée à l'une des parties GPIO (102).

14. Véhicule électrique (300) comprenant le système de batterie (100) selon l'une quelconque des revendications 11 à 13.

15. Procédé de mesure de température pour un système de batterie (100), dans lequel le procédé comprend les étapes consistant à :
a) fournir un système de batterie (100) tel que défini dans l'une quelconque des revendications 11 à 13 ;
b) connecter la première extrémité (EY0.1, EY1.1, EY2.1, EY3.1) d'une deuxième ligne sélectionnée (Y0, Y1, Y2, Y3) à la terre ; et
c) déterminer les températures des premières diodes de détection de température (D1.1, D2.1, ..., D16.1) qui sont connectées à la deuxième ligne sélectionnée (Y0, Y1, Y2, Y3) en mesurant les tensions via la partie de mesure de tension (36) .
